# EUROPÄISCHE PATENTANMELDUNG

(11) **EP 0 922 974 A2**
(43) Veröffentlichungstag der Anmeldung: **16.06.1999**
(21) Anmeldenummer: 98122779.6
(22) Anmeldetag: 01.12.1998
(51) Int. Cl.: G02B 6/38

(54) **Kupplung für Lichtwellenleiterkabel**

(30) Priorität: 11.12.1997 DE 29721881 U
(71) Anmelder: Harting KGaA, 32325 Espelkamp (DE)
(72) Erfinder: Harting, Dietmar Dipl.-Kfm., 32339 Espelkamp (DE); Bussmann, Rainer Dipl.-Ing., 49152 Bad Essen (DE); Kleedörfer, Claus Dipl.-Ing., 32369 Rahden (DE); Steiger, Uwe Dipl.-Ing., 33334 Gütersloh (DE)

(57) **Zusammenfassung**

Für eine Kupplung für Lichtwellenleiterkabel, insbesondere für Kunststoff-Lichtwellenleiter, wird vorgeschlagen, die Kupplung mit einer Kupplungshülse zu versehen, in die die Enden der Lichtwellenleiter einschiebbar sind, wobei die Kupplungshülse mit einer den Lichtwellenleitern angepaßten Durchgangsbohrung versehen ist, und die Enden der Kupplungshülse mit einem Gewinde und endseitig mit einem Konus zu versehen, und in den mit den Gewinden versehenen Enden axiale Schlitze vorzusehen, und eine Überwurfmutter mit einem Innenkonus auf die Enden aufzuschrauben, bei deren Aufschrauben die geschlitzten Enden radial zusammengepreßt werden.

## Beschreibung

Die Erfindung betrifft eine Kupplung für Lichtwellenleiterkabel, insbesondere für Kunststoff-Lichtwellenleiter.

Derartige Kupplungen dienen der mechanischen und optischen Verbindung der Enden von Lichtwellenleitern. Dabei soll eine derartige Kupplung mechanisch stabil sein und eine ausreichende optische Kopplung der Lichtwellenleiter aufweisen.

Aus der Firmenschritt 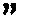 Suhner Fiberoptik, LWL-Komponenten, Gesamtkatalog'' Nachdruck 05.96 der Fa. Huber + Suhner AG, Herisau, Schweiz ist es bekannt, zur Kupplung der Enden von Lichtwellenleitern, die Lichtwellenleiter mit Steckern zu versehen und diese Stecker gegeneinandergerichtet in eine Kupplungshülse, die zur Aufnahme der Steckerstifte ausgebildet ist, einzustecken.

Bei dieser im großen und ganzen zufriedenstellenden Kupplung müssen jedoch die Lichtwellenleiter mit entsprechenden Steckern versehen werden. Dabei sind für die Steckermontage verschiedene Werkzeuge nötig, um die Lichtwellenleiter-Faser im Stecker durch Crimpung oder Kleben zu befestigen.

Der Erfindung liegt die Aufgabe zugrunde, eine Kupplung für Lichtwellenleiter der eingangs genannten Art dahingehend auszubilden, daß die Verbindung der Lichtwellenleiter ohne spezielle Werkzeuge hergestellt werden kann und daß die Kupplung insgesamt preiswert herstellbar ist.

Diese Aufgabe wird dadurch gelöst, daß die Kupplung eine Kupplungshülse aufweist, in die die Enden der Lichtwellenleiter einschiebbar sind, wobei die Kupplungshülse mit einer den Lichtwellenleitern angepaßten Durchgangsbohrung versehen ist, daß die Enden der Kupplungshülse mit einem Gewinde versehen sind und endseitig einen Konus aufweisen, daß die mit den Gewinden versehenen Enden mit axialen Schlitzen versehen sind, und daß eine Überwurfmutter mit einem Innenkonus auf die Enden aufschraubbar ist, bei deren Aufschrauben die geschlitzten Enden radial zusammengepreßt werden.

Vorteilhafte Ausgestaltungen der Erfindung sind in den Ansprüchen 2 bis 5 angegeben.

Die mit der Erfindung erzielten Vorteile bestehen insbesondere darin, daß zur Herstellung der Verbindung von zwei Lichtwellenleitern keine speziellen Werkzeuge benötigt werden und der Aufwand somit äußerst gering ist. Durch die Reduzierung der erforderlichen Bauteile werden die Kosten für eine Lichtwellenleiterverbindung im Vergleich zu bekannten Verbindungen darüber hinaus verringert. Gleichzeitig ist dabei auch das Einbauvolumen reduziert und eine Konfektionierung ist auch bei relativ kurzen Kabellängen möglich.

Ein Ausführungsbeispiel der Erfindung ist in der Zeichnung dargestellt und wird im folgenden näher erläutert. Es zeigen
- Fig. 1: eine Ansicht einer Kupplung mit eingeführten Lichtwellenleitern,
- Fig. 2: die perspektivische Ansicht der Kupplung gem. Fig. 1,
- Fig. 3: die Ansicht einer modifizierten Kupplung,
- Fig. 4: die Ansicht einer weiteren modifizierten Kupplung, und
- Fig. 5: die auseinandergezogene Ansicht der Kupplungshülse der Kupplung gem. Fig. 4.

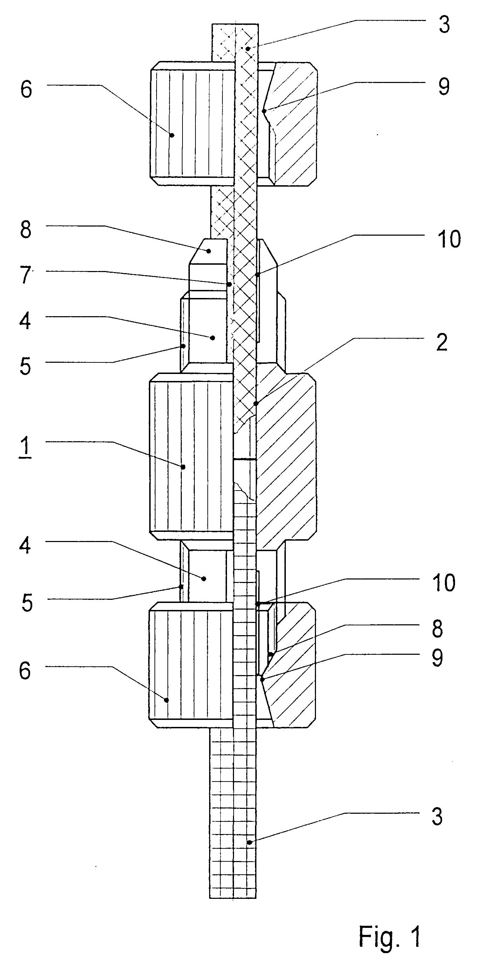

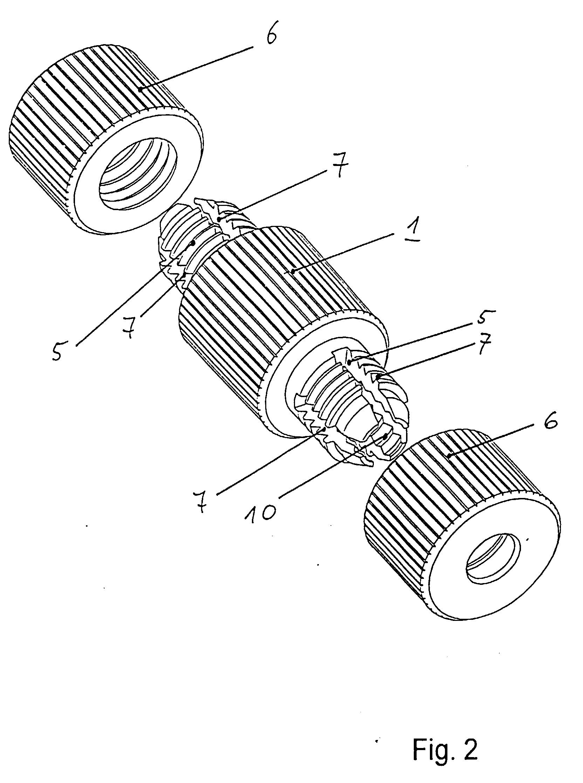

Die in den Fig. 1 und 2 dargestellte Kupplung besteht im wesentlichen aus einer Kupplungshülse 1, die mit einer Durchgangsbohrung 2 versehen ist, wobei der Durchmesser dieser Bohrung dem Außendurchmesser der einzuführenden Lichtwellenleiter 3 angepaßt ist. Die Enden 4 der Kupplungshülse sind jeweils mit einem Gewinde 5 versehen, auf das eine Überwurfmutter 6 aufschraubbar ist. Zur Vereinfachung der Handhabung der Teile ist der mittlere Bereich der Kupplungshülse verdickt ausgebildet und mit einer Rändelung versehen und auch die Überwurfmuttern sind mit einer äußeren Rändelung ausgestattet. Weiterhin sind die Enden 4 der Kupplungshülse mit axialen Schlitzen 7 versehen, die sich etwa bis zum Ende des Gewindebereiches erstrecken. Dadurch sind die Enden 4 in radialer Richtung elastisch zusammendrückbar.

Die Enden sind ferner mit einem äußeren Konus 8 versehen, auf den ein Innenkonus 9 in den Überwurfmuttern bei deren Aufschrauben einwirkt und die Enden dabei radial zusammenpreßt.

Wie in der Fig. 1 dargestellt, sind in die Durchgangsbohrung 2 der Kupplungshülse die Enden zweier Lichtwellenleiter 3 gegeneinandergerichtet eingeschoben. Dabei sind die Lichtwellenleiter jeweils etwa bis zur Mitte der Kupplungshülse eingeschoben und liegen dicht gegeneinander, so daß eine Übertragung von optischen Signalen von einem zum anderen Lichtwellenleiter gewährleistet ist. Zur Fixierung der Lichtwellenleiter in der Kupplungshülse werden die Überwurfmuttern fest aufgeschraubt, wobei die Enden 4 zusammengedrückt und gegen die äußere Ummantelung der Lichtwellenleiter gepreßt werden. Zur Verbesserung der Klemmung der Lichtwellenleiter kann ggf. vorgesehen sein, daß die Durchgangsbohrung im Bereich der geschlitzten Enden 4 eine aufgerauhte Oberfläche aufweist, wobei diese durch das Einbringen eines Gewindes 10 erzielt werden kann.

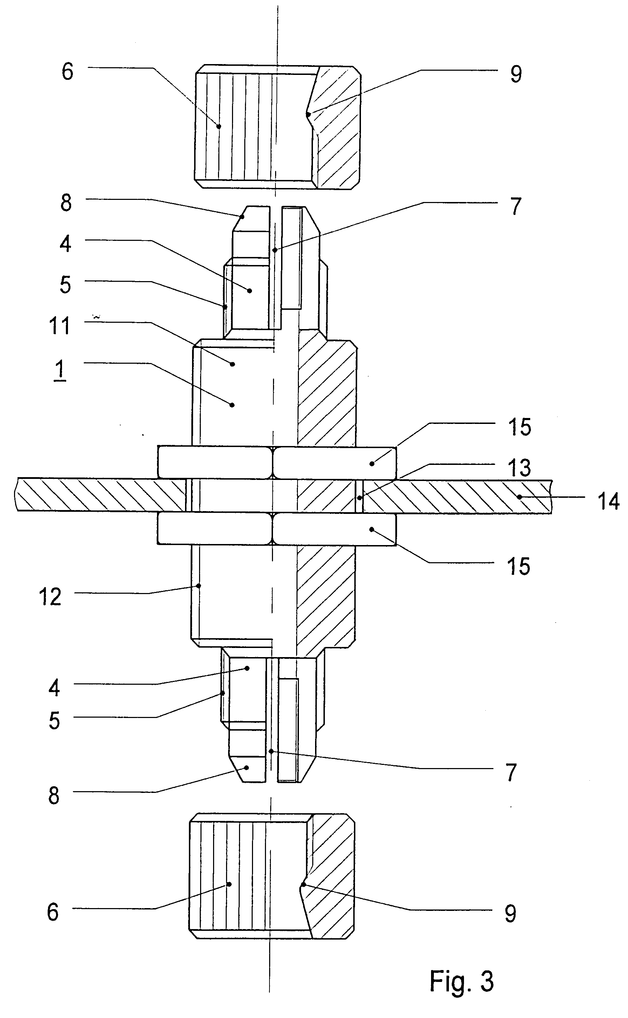

In der Fig. 3 ist eine modifizierte Kupplung dargestellt, die im wesentlichen wie die weiter oben beschriebene Kupplung ausgebildet ist und es sind für gleiche Teile gleiche Bezugszeichen wie zur Fig. 1, 2 verwendet worden. Bei dieser Kupplung ist der mittlere Abschnitt 11 der Kupplungshülse 1 mit einem Außengewinde 12 versehen. Wie in der Zeichnung dargestellt, kann die Kupplungshülse in eine, mit einer entsprechenden Bohrung 13 versehene Wand 14 eingesetzt und mittels Muttern 15 verschraubt werden. Ggf. kann auch vorgesehen sein, daß der mittlere Abschnitt 11 mit einem hier nicht näher dargestellten Bund versehen ist und daß zur Befestigung in der Wand dazu nur eine Mutter nötig ist.

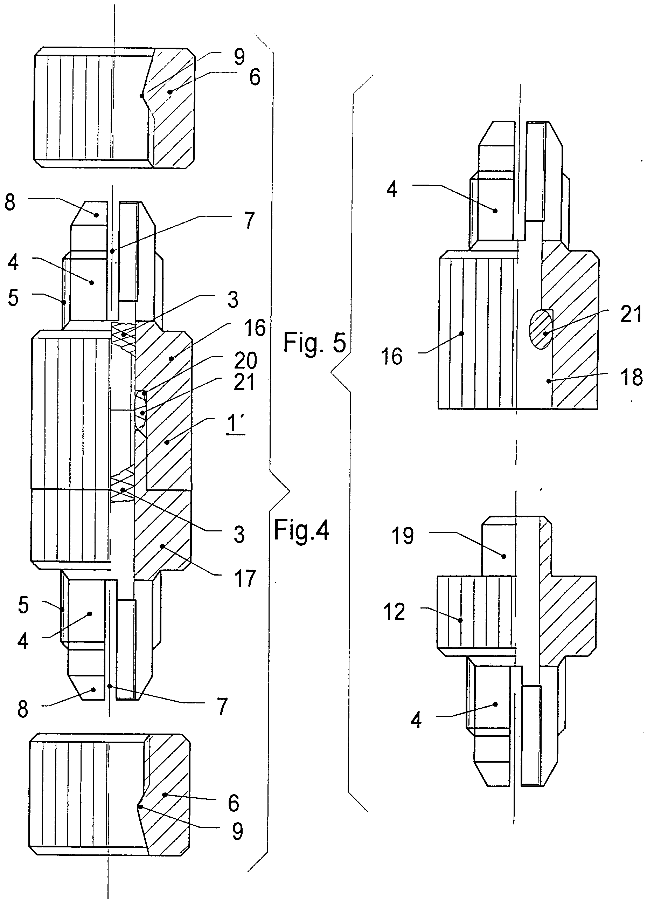

In den Fig. 4 und 5 ist eine weitere modifizierte Kupplung dargestellt, die im wesentlichen ebenfalls wie die weiter oben beschriebene Kupplung ausgebildet ist und es sind auch hier für gleiche Teile gleiche Bezugszeichen wie bei den Fig. 1 und 2 verwendet worden. Der Unterschied besteht hierbei darin, daß die Kupplungshülse 1' aus zwei Teilen 16, 17 zusammengefügt ist. Dabei ist das Teil 16 der Kupplungshülse mit einer Bohrung 18 versehen, in die ein stiftförmiger Ansatz 19 des Teils 17 der Kupplungshülse einfügbar ist. Dabei ist der Ansatz 19 nur so lang ausgebildet, daß nach dem Zusammenfügen der beiden Teile eine Nut 20 innerhalb der Kupplungshülse ausgebildet ist. Der Zusammenhalt der beiden Teile 16, 17 erfolgt vorzugsweise durch eine Preßpassung des Ansatzes in der Bohrung. Des weiteren sind die Bohrung und der Ansatz so gestaltet, daß sich die Nut 20 etwa in der Mitte der Kupplungshülse 1' befindet. In die Nut 20 ist weiterhin ein elastischer Dichtring 21 eingesetzt. Zur Kupplung von zwei Lichtwellenleitern wurde diese so in die Kupplungshülse eingeführt, daß ihre Enden im Bereich des Dichtringes voreinanderliegen. Dabei schützt dann der Dichtring die Faserstirnflächen vor Feuchtigkeit und mechanischen Verunreinigungen. Eine derartig ausgebildete Kupplung kann somit auch unter rauhen Umgebungsbedingungen eingesetzt werden.

Wie vorstehend beschrieben, wird die Nut durch entsprechende Ausbildung der beiden Teile der zweiteiligen Kupplungshülse 1' gebildet. Es kann jedoch auch vorgesehen sein, daß eine solche Nut auch bei einer einteiligen Kupplungshülse 1 eingeformt ist, in die dann ein Dichtring 21 eingefügt ist.

## Patentansprüche

1. Kupplung für Lichtwellenleiterkabel, insbesondere für Kunststoff-Lichtwellenleiter, dadurch gekennzeichnet,
daß die Kupplung eine Kupplungshülse (1, 1') aufweist, in die die Enden der Lichtwellenleiter (3) einschiebbar sind, wobei die Kupplungshülse mit einer den Lichtwellenleitern angepaßten Durchgangsbohrung (2) versehen ist,
daß die Enden (4) der Kupplungshülse mit einem Gewinde (5) versehen sind und endseitig einen Konus (8) aufweisen,
daß die mit den Gewinden versehenen Enden (4) mit axialen Schlitzen (7) versehen sind, und
daß eine Überwurfmutter (6) mit einem Innenkonus (9) auf die Enden aufschraubbar ist, bei deren Aufschrauben die geschlitzten Enden (4) radial zusammengepreßt werden.

2. Kupplung nach Anspruch 1, dadurch gekennzeichnet,
daß die Durchgangsbohrung (2) der Kupplungshülse (1, 1') im Bereich der geschlitzten Enden (4) mit einer aufgerauhten Oberfläche versehen ist.

3. Kupplung nach Anspruch 1 oder 2, dadurch gekennzeichnet,
daß der mittlere Bereich (11) der Kupplungshülse (1, 1') mit einem Außengewinde (12) versehen ist.

4. Kupplung nach einem der vorstehenden Ansprüche, dadurch gekennzeichnet,
daß in der Durchgangsbohrung (2) der Kupplungshülse (1, 1') eine etwa mittige Nut (20) vorgesehen ist, und
daß in die Nut ein elastischer Dichtring (21) eingefügt ist.

5. Kupplung nach einem der vorstehenden Ansprüche, dadurch gekennzeichnet,
daß die Kupplungshülse (1') aus zwei Teilen (16, 17) zusammengefügt ist.
